(19) Europäisches Patentamt
European Patent Office
Office européen des brevets

(11) **EP 3 851 837 B1**

(12) **FASCICULE DE BREVET EUROPEEN**

(45) Date de publication et mention de la délivrance du brevet:
**03.05.2023 Bulletin 2023/18**

(21) Numéro de dépôt: **21151713.1**

(22) Date de dépôt: **14.01.2021**

(51) Classification Internationale des Brevets (IPC):
**G01N 23/04** (2018.01) **G01T 7/00** (2006.01)

(52) Classification Coopérative des Brevets (CPC):
**G01N 23/04; G01T 7/005;** G01N 2223/303; G01N 2223/501

(54) **PROCÉDÉ D'ÉTABLISSEMENT D'UNE FONCTION DE RÉPONSE SPECTRALE D'UN SYSTÈME DE MESURE PAR RAYON X OU GAMMA**

VERFAHREN ZUR BESTIMMUNG EINER FUNKTION DER SPEKTRALEN EMPFINDLICHKEIT EINES RÖNTGEN- ODER GAMMASTRAHLENMESSSYSTEMS

METHOD FOR ESTABLISHING A SPECTRAL RESPONSE FUNCTION OF A SYSTEM FOR MEASURING BY X OR GAMMA RAY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.01.2020 FR 2000422**

(43) Date de publication de la demande:
**21.07.2021 Bulletin 2021/29**

(73) Titulaire: **Commissariat à l'énergie atomique et aux énergies alternatives 75015 Paris (FR)**

(72) Inventeurs:
• **Rebuffel, Véronique**
  **38054 GRENOBLE CEDEX 09 (FR)**
• **Fournier, Clarisse**
  **38054 GRENOBLE CEDEX 09 (FR)**
• **Rodesch, Pierre-Antoine**
  **38054 GRENOBLE CEDEX 09 (FR)**

(74) Mandataire: **INNOV-GROUP**
  **310, avenue Berthelot**
  **69372 Lyon Cedex 08 (FR)**

(56) Documents cités:
• **LIU XUEJIN ET AL: "Spectral response model for a multibin photon-counting spectral computed tomography detector and its applications", JOURNAL OF MEDICAL IMAGING, SOCIETY OF PHOTO-OPTICAL INSTRUMENTATION ENGINEERS, 1000 20TH ST. BELLINGHAM WA 98225-6705 USA, vol. 2, no. 3, 11 septembre 2015 (2015-09-11), page 33502, XP060072428, ISSN: 2329-4302, DOI: 10.1117/1.JMI.2.3.033502 [extrait le 2015-09-11]**
• **RODESCH PIERRE-ANTOINE ET AL: "Spectral CT reconstruction with an explicit photon-counting detector model: a one-step approach", PROGRESS IN BIOMEDICAL OPTICS AND IMAGING, SPIE - INTERNATIONAL SOCIETY FOR OPTICAL ENGINEERING, BELLINGHAM, WA, US, vol. 10573, 9 mars 2018 (2018-03-09), pages 1057353-1057353, XP060105018, ISSN: 1605-7422, DOI: 10.1117/12.2285792 ISBN: 978-1-5106-0027-0**

**Description**

## DOMAINE TECHNIQUE

Le domaine technique de l'invention est la détection spectrométrique de rayonnements ionisants, par un imageur pixelisé.

## ART ANTERIEUR

Le contrôle d'objets par rayonnement X, dans le domaine médical ou industriel, est très répandu. Les procédés existants consistent à disposer un objet entre une source de rayonnement et un détecteur, puis à irradier l'objet à l'aide de la source. Le détecteur forme alors une image, généralement en deux dimensions, du rayonnement transmis par l'objet. Cette image est représentative de l'atténuation, par l'objet, du rayonnement émis par la source.

Une telle image peut être utilisée à des fins de diagnostic médical, de contrôle non destructif dans le domaine industriel, ou encore dans la détection de matériaux sensibles, par exemple dans le contrôle de bagages.

Récemment, l'émergence de détecteurs spectralement résolus a permis d'améliorer sensiblement les performances de ces analyses. De tels détecteurs permettent d'acquérir un spectre d'un rayonnement transmis par un matériau irradié. Le spectre comporte plusieurs canaux, chaque canal étant représentatif d'une bande d'énergie. Un tel spectre peut généralement comporter des dizaines voire des centaines de canaux. Généralement, plusieurs spectres d'un même objet sont acquis, de façon à reconstruire l'objet, c'est-à-dire obtenir une distribution spatiale de caractéristiques de l'objet. Il peut s'agir d'une estimation de la distribution spatiale de la densité et ou du numéro atomique de l'objet, ou d'une estimation de la nature de matériaux présents dans l'objet.

Une application courante est la réalisation de reconstruction tomographique, à partir de spectres effectués autour d'un objet à reconstruire.

L'interprétation de mesures spectrométriques suppose une maîtrise de la réponse du système de mesure utilisé. Le système de mesure comporte notamment la source d'irradiation et le détecteur, ce dernier se présentant usuellement sous la forme d'une ligne ou d'une matrice de pixels. Chaque pixel constitue alors un détecteur spectrométrique élémentaire. Une connaissance aussi précise que possible de la réponse du système est importante, de façon à augmenter la performance des analyses et faciliter l'interprétation.

Une méthode de détermination d'une réponse spectrale d'un détecteur est aussi décrite dans LIU XUEJIN ET AL: "Spectral response model for a multibin photon-counting spectral computed tomography détecter and its applications", JOURNAL OF MEDICAL IMAGING, SOCIETY OF PHOTO-OPTICAL INSTRUMENTATION ENGINEERS, 1000 20TH ST. BELLINGHAM WA 98225-6705 USA, vol. 2, no. 3, 11 septembre 2015 (2015-09-11), page 33502, XP060072428,ISSN: 2329-4302, DOI: 10.1117/1.JML2.3.033502.

Les inventeurs proposent une méthode permettant d'obtenir une réponse du système de façon plus précise que selon l'art antérieur.

## EXPOSE DE L'INVENTION

Un premier objet de l'invention est un procédé de détermination d'une réponse spectrale d'un système de mesure spectrométrique de photons ionisants de type X ou gamma, le système de mesure comportant:

- une source d'irradiation, configurée pour émettre un rayonnement ionisant ;
- un détecteur pixelisé, comportant des pixels, chaque pixel étant configuré pour détecter un rayonnement émis par la source de rayonnement, et à en acquérir un spectre d'énergie, selon plusieurs canaux d'énergie;
- la réponse spectrale du système de mesure comportant des spectres efficaces, définis pour chaque pixel, et dans chaque bande d'énergie, les spectre efficace d'un pixel, dans un canal d'énergie, correspondant à une distribution en énergie des photons détectés, par le pixel, dans le canal d'énergie, en l'absence d'objet interposé entre la source et le pixel ;

le procédé comportant les étapes suivantes :

a) disposition d'un objet de calibration entre la source d'irradiation et le détecteur, l'objet de calibration comportant :

- un premier matériau, s'étendant selon une première épaisseur, le premier matériau étant associé à une première fonction spectrale d'atténuation linéaire théorique ;
- un deuxième matériau s'étendant selon une deuxième épaisseur, le deuxième matériau étant associé à une deuxième fonction spectrale d'atténuation linéaire théorique ;

b) irradiation de l'objet de calibration par la source d'irradiation et acquisition, par un pixel du détecteur, d'un spectre de calibration du rayonnement transmis par l'objet de calibration et atteignant le pixel ;

c) dans différents canaux d'énergie, prise en compte d'une fonction spectrale d'atténuation de l'objet de calibration, comportant une première fonction spectrale d'atténuation linéaire apparente du premier matériau et une deuxième fonction spectrale d'atténuation linéaire apparente du deuxième matériau respectivement multipliées par la première épaisseur et par la deuxième épaisseur ;

d) réitération des étapes a) à c), en utilisant différents objets de calibration, les différents objets de calibration présentant respectivement des premières épaisseurs et/ou des deuxièmes épaisseurs différentes ;

e) détermination d'un spectre efficace du pixel, dans au moins un canal d'énergie, dit canal d'énergie considéré, par une minimisation d'écart entre respectivement:

- une valeur du spectre de calibration, mesuré lors de l'étape b) de chaque itération, dans le canal d'énergie considéré;
- et une estimation de la valeur de chaque spectre de calibration, dans le canal d'énergie considéré, chaque estimation étant obtenue en combinant le spectre efficace du pixel et la fonction spectrale d'atténuation de l'objet de calibration prise en compte lors de l'étape c) de chaque itération des étapes a) à c);

l'étape e) mettant en oeuvre un algorithme d'optimisation ;
le procédé étant caractérisé en ce que lors de l'étape c) de chaque itération :

- la première fonction spectrale d'atténuation linéaire apparente est une somme pondérée de la première fonction spectrale d'atténuation linéaire théorique et d'une première fonction spectrale de correction ;
- et/ou la deuxième fonction spectrale d'atténuation linéaire apparente est une somme pondérée de la deuxième fonction spectrale d'atténuation linéaire théorique et d'une deuxième fonction spectrale de correction.

Le premier matériau et le deuxième matériau sont différents.

Selon un mode de réalisation, la première fonction spectrale d'atténuation linéaire apparente comporte:

- la première fonction spectrale d'atténuation linéaire théorique pondérée par un premier scalaire;
- la première fonction spectrale de correction pondérée par un deuxième scalaire;
- le premier et le deuxième scalaire étant déterminés lors de la minimisation effectuée lors de l'étape e).

Selon un mode de réalisation, la deuxième fonction spectrale d'atténuation linéaire apparente comporte :

- la deuxième fonction spectrale d'atténuation linéaire théorique pondérée par un troisième scalaire;
- la deuxième fonction spectrale de correction pondérée par un quatrième scalaire;
- le troisième et le quatrième scalaire étant déterminés lors de la minimisation effectuée lors de l'étape e).

Selon un mode de réalisation, la première fonction spectrale de correction est la deuxième fonction spectrale d'atténuation linéaire théorique.

Selon un mode de réalisation, la deuxième fonction spectrale de correction est la première fonction spectrale d'atténuation linéaire théorique.

Selon un mode de réalisation, la première fonction spectrale de correction ou la deuxième fonction spectrale de correction est une fonction spectrale d'atténuation linéaire théorique d'un troisième matériau, différent du premier matériau et du deuxième matériau.

L'étape e) peut mettre en oeuvre un algorithme d'optimisation itératif.

Selon un mode de réalisation, l'étape e) comporte :

- une formation d'un vecteur, comportant les différentes valeurs des spectres de calibration, respectivement mesurés au cours de l'étape c) de chaque itération, pour le canal d'énergie considéré ;
- une estimation dudit vecteur, chaque terme du vecteur étant estimé en combinant le spectre efficace du pixel et la fonction spectrale d'atténuation de l'objet de calibration respectivement prise en compte lors de l'étape c) de chaque itération.

Les étapes a) à e) peuvent être effectuées pour chaque pixel du détecteur et/ou pour différents canaux d'énergie.

Un deuxième objet de l'invention est un système de mesure spectrométrique de photons ionisants de type X ou gamma, le système de mesure comportant :

- une source d'irradiation, configurée pour émettre un rayonnement ionisant ;
- un détecteur pixelisé, comportant des pixels, chaque pixel étant configuré pour détecter un rayonnement émis par la source de rayonnement, et à en acquérir un spectre d'énergie, selon plusieurs canaux d'énergie;

le système de mesure comportant une unité de traitement, configurée pour mettre en oeuvre l'étape e) d'un procédé selon le premier objet de l'invention, à partir de différents spectres de calibration mesurés par au moins un pixel.

L'invention sera mieux comprise à la lecture de l'exposé des exemples de réalisation présentés, dans la suite de la description, en lien avec les figures listées ci-dessous.

## FIGURES

La figure 1 schématise un dispositif permettant une mise en oeuvre de l'invention.

La figure 2A illustre une variabilité d'un spectre d'un rayonnement émis par la source et auquel est exposé un pixel.

La figure 2B montre une matrice de réponse d'un pixel.

Les figures 2C et 2D représentent respectivement une ligne et une colonne de la matrice de réponse représentée sur la figure 2B.

Les figures 3A à 3D sont des exemples de spectres efficaces respectivement associés à différents canaux d'énergie d'un pixel.

La figure 4 schématise un objet de calibration.

La figure 5A montre des fonctions spectrales d'atténuation linéaire théoriques de Polypropylène (PP), de Polychlorure de Vinyle (PVC) ainsi qu'une fonction spectrale d'atténuation modifiée du PVC.

Les figures 5B et 5C montre les spectres efficaces respectivement associés à deux canaux d'énergie d'un pixel, en considérant les fonctions spectrales d'atténuation de PP et de PVC d'une part et les fonctions spectrales d'atténuation de PP et de PVC modifiée d'autre part.

La figure 6 schématise les principales étapes de l'invention.

Les figures 7A et 7B montrent une estimation de spectres efficaces respectivement associés à deux canaux d'énergie d'un pixel, en mettant en oeuvre l'invention et sans mettre en oeuvre l'invention.

La figure 8 montre une erreur quadratique, en fonction des canaux d'énergie d'un pixel, avec et sans mise en oeuvre de l'invention.

Les figures 9A et 9B montrent des résultats de reconstructions tomographiques effectuées respectivement sans mettre en oeuvre l'invention et en mettant en oeuvre l'invention.

## EXPOSE DE MODES DE REALISATION PARTICULIERS

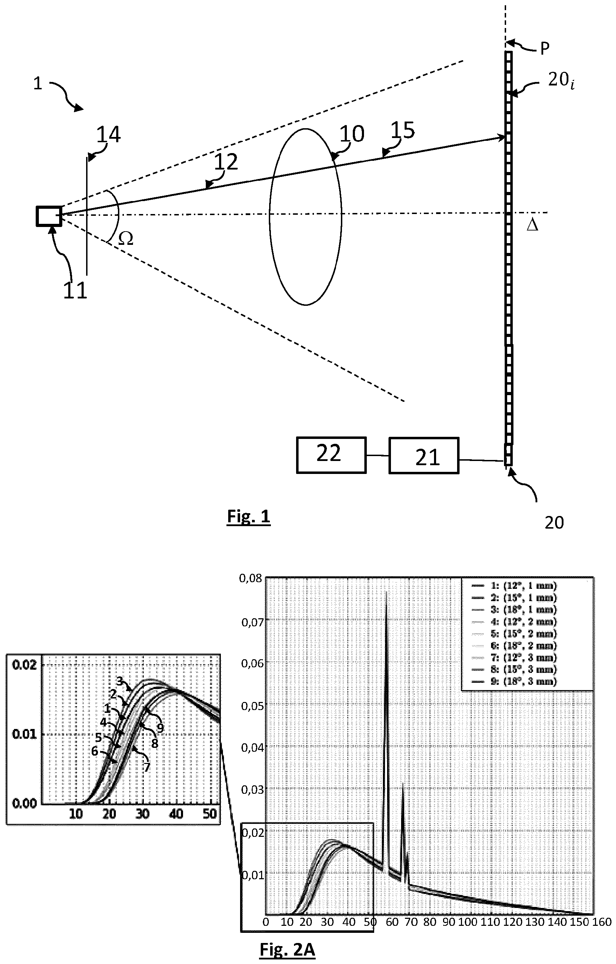

La figure 1 représente un mode de réalisation d'un système de mesure 1 mettant en oeuvre un procédé selon l'invention. Le système de mesure comporte une source d'irradiation 11 et un dispositif de détection 20.

La source d'irradiation 11 émet un rayonnement électromagnétique ionisant 12, dit rayonnement incident, vers un objet 10. L'objet 10 est disposé entre la source d'irradiation 11 et le dispositif de détection 20. La source d'irradiation 11 est généralement un tube générateur de rayons X. La source d'irradiation émet dans un angle solide $\Omega$ s'étendant autour d'un axe $\Delta$. La source d'irradiation 11 peut être associée à un filtre 14, disposé dans le champ d'observation permettant une atténuation du rayonnement incident, notamment à faible énergie. Il peut par exemple s'agir d'un filtre d'aluminium d'épaisseur de quelques millimètres.

Le dispositif de détection 20 comporte des détecteurs de rayonnement $20_i$ prenant la forme de pixels $20_i$ agencés selon un plan, dit plan de détection P. L'indice $i$ désigne les coordonnées de chaque pixel dans le plan de détection. Les pixels peuvent s'étendre selon une ligne mais en général, ils s'étendent selon une matrice régulière bidimensionnelle.

L'objet 10 peut être un tissu biologique vivant, par exemple une partie du corps d'un animal ou d'un être humain. Le dispositif est alors un dispositif d'imagerie médicale. L'objet peut également être une pièce industrielle ou un bagage, le dispositif étant alors utilisé à des fins de contrôle non destructif.

Le terme rayonnement électromagnétique ionisant désigne un rayonnement électromagnétique constitué de photons d'énergie supérieure à 1 keV, et de préférence inférieure à 5 MeV. La plage d'énergie du rayonnement ionisant peut être comprise entre 1 keV et 2 MeV, mais elle s'étend le plus souvent entre 1 keV et 150 keV ou 300 keV. Le rayonnement ionisant peut être un rayonnement X ou $\gamma$. De préférence, la source de rayonnement ionisant est poly-énergétique, le rayonnement incident étant émis selon une plage d'énergie s'étendant généralement selon plusieurs dizaines voire centaines de keV.

L'objet 10 irradié par la source 11 transmet au dispositif de détection 20 un rayonnement 15, dit rayonnement transmis, ce dernier atteignant les pixels, chacun formant un détecteur $20_i$. Chaque pixel $20_i$ est un détecteur spectro-métrique comportant :

- un matériau détecteur, apte à interagir avec les photons du rayonnement 15 transmis par l'objet, ce matériau étant de type scintillateur ou, de préférence, un matériau semiconducteur compatible avec une utilisation à la température ambiante, de type CdTe, CdZnTe ;
- un circuit électronique, apte à générer un signal dont l'amplitude dépend, et est de préférence proportionnelle, à l'énergie déposée par chaque photon interagissant dans le matériau détecteur ;
- un circuit de spectrométrie, apte à établir un spectre en énergie, noté $M_i$, des signaux détectés pendant une période temporelle, dite période d'acquisition.

Chaque pixel $20_i$ est ainsi apte à détecter ledit rayonnement transmis 15 et à en former un spectre en énergie $M_i$.

Le système 1 comporte également une unité de traitement 22. L'unité de traitement 22 comporte un microprocesseur relié à une mémoire programmable 21 dans laquelle est stockée une séquence d'instructions pour effectuer les opérations de traitement de spectres et de calculs décrites dans cette description. Ces instructions peuvent être sauvegardées sur un support d'enregistrement, lisible par le processeur, de type disque dur, CDROM ou autre type de mémoire.

Un spectre d'énergie $M_i$ est un vecteur, dont chaque terme $M_i(c)$ représente une quantité de rayonnement détecté par le pixel $20_i$, pendant une durée d'acquisition du spectre, dans une bande d'énergie $E \pm \frac{\partial E}{2}$, avec $\partial E$ étant la largeur spectrale de chaque canal. Chaque bande d'énergie est usuellement désignée par le terme "canal d'énergie", connu de l'homme du métier Dans la suite de la description le terme fonction spectrale désigne une fonction discrétisée sur différents canaux d'énergie.

On a représenté, sur la figure 2A, une modélisation théorique d'une fonction spectrale d'irradiation $F_i^0$ d'un pixel $20_i$ par une source d'irradiation de type tube générateur de rayons X. Il s'agit d'un spectre d'un rayonnement émis par la source 11 et auquel est exposé un pixel $20_i$. La fonction spectrale d'irradiation $F_i^0$ comporte des pics caractéristiques, correspondant à des pics de fluorescence du matériau formant l'anode de la source, lorsque cette dernière est un tube générateur X. Pour effectuer ces simulations, le détecteur a été considéré directement exposé à la source d'irradiation, c'est-à-dire sans objet entre la source d'irradiation et le détecteur. On a fait varier l'épaisseur du filtre 14 en aluminium (en mm), et l'angle d'anode (en °). L'angle d'anode correspond à une orientation de l'anode par rapport à un plan perpendiculaire à un faisceau électronique atteignant l'anode. Sur la figure 2A, neuf configurations ont été modélisées, référencées de 1 à 9. En fonction des paramètres (épaisseur, angle), la fonction spectrale d'irradiation $F_i^0$ varie, en particulier à basse énergie. Sur la figure 2A, les axes des abscisses et ordonnées représentent respectivement l'énergie (keV) et des valeurs normalisées de chaque canal d'énergie. Il apparaît que la forme du spectre émis par la source d'irradiation varie en fonction de son paramétrage. Par valeur d'un canal d'énergie, on entend une valeur du spectre audit canal d'énergie, c'est-à-dire le nombre de signaux détectés dans le canal d'énergie.

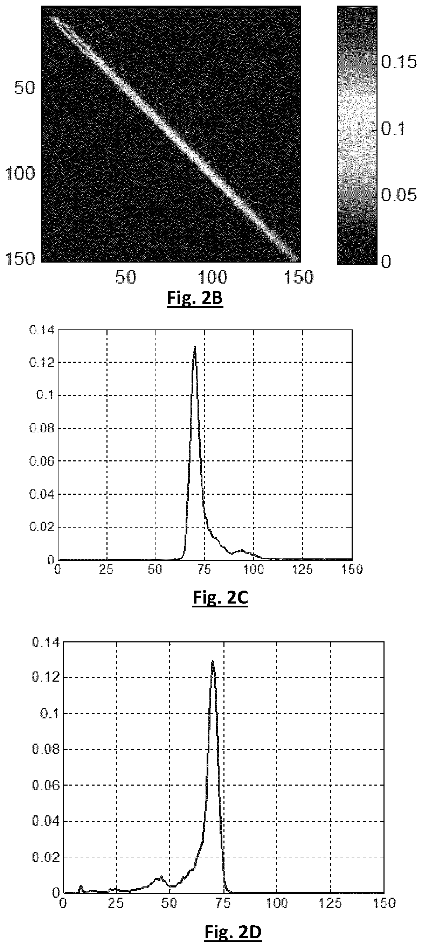

Chaque pixel $20_i$ du détecteur 20 peut être caractérisé par une matrice de réponse $D_i$. Un exemple de matrice de réponse $D_i$, obtenue par simulation, de taille $N_c \times N_E$, est représenté sur la figure 2B. $N_c$ est le nombre de canaux de chaque spectre formé par le détecteur et $N_E$ est le nombre de canaux selon lesquels l'énergie d'un rayonnement incident au pixel est discrétisée. $N_c$ et $N_E$ sont deux entiers positifs. Dans cet exemple, $N_c = N_E = 150$.

Chaque terme $D_i(c,E)$ de la matrice de réponse représente une probabilité qu'un photon incident au pixel, d'énergie $E$, soit considéré par le pixel comme ayant une énergie $c$.

Autrement dit, chaque ligne $D_i(c,\cdot)$ de la matrice de réponse, telle que celle représentée sur la figure 2C, représente une distribution de probabilité de l'énergie $E$ d'un photon atteignant le pixel lorsqu'un photon est détecté dans le canal $c$. La figure 2C représente la ligne 70 de la matrice de réponse $D_i$. De façon analogue, chaque colonne $D_i(\cdot,E)$ de la matrice de réponse, telle que celle représentée sur la figure 2D, correspond à une distribution de probabilité du canal d'énergie c dans lequel le photon est détecté par le pixel lorsque le photon atteignant le pixel a une énergie $E$. La figure 2D représente la colonne 70 de la matrice de réponse $D_i$. Dans le cas d'un pixel parfait, la matrice de réponse $D_i$ est la matrice identité. La matrice de réponse $D_i$ est caractéristique de chaque pixel $20_i$. La variabilité de la matrice de réponse $D_i$ peut être importante entre les pixels $20_i$ d'un même détecteur 20.

Pour chaque pixel $20_i$, la fonction spectrale d'irradiation $F_i^0$ ainsi que la matrice de réponse $D_i$ forment une réponse du dispositif de détection. Il faut prendre compte cette réponse lorsqu'on dispose un objet 10 entre la source d'irradiation 11 et le pixel $20_i$ et que l'on analyse un spectre $M_i$ transmis par l'objet et détecté par le pixel. Il est usuel d'exprimer la réponse d'un pixel $20_i$

$$S_i^{eff}(c, E) = D_i(c, E)F_i^0(E) \quad (1)$$

Chaque terme $S_i^{eff}(c, E)$ décrit une contribution de photons incidents d'énergie $E$ au nombre de photons détectés dans un canal d'énergie $c$. Chaque terme combine la fonction de réponse de la source d'irradiation 11, représentée par la fonction spectrale d'irradiation $F_i^0$, et la fonction de réponse du pixel, représentée par la matrice de réponse $D_i$. Les spectres efficaces $S_{i,c}^{eff}$ associés à un pixel $20_i$, respectivement pour différents canaux c, peuvent être exprimés sous la forme d'une matrice de spectres efficaces $S_i^{eff}$ de taille $N_c \times N_E$. Chaque ligne de la matrice des spectres efficaces $S_i^{eff}$ d'un pixel $20_i$ est un vecteur ligne, de taille $(1, N_E)$, correspondant à un spectre efficace $S_{i,c}^{eff}$ d'un canal c pour le pixel $20_i$. Pour un canal donné $c$, le spectre efficace $S_{i,c}^{eff}$ correspond à une distribution de l'énergie des photons incidents contribuant nombre d'évènements détectés dans le canal, en l'absence d'objet entre la source d'irradiation et le pixel. La matrice des spectres efficaces $S_i^{eff}$ d'un pixel $20_i$ est une matrice formée par l'assemblage des $N_c$ spectres efficaces des canaux $S_{i,c}^{eff}$ pour le pixel, ces derniers prenant la forme de vecteurs lignes. Le spectre efficace n'est pas mesurable directement. Il est en revanche possible de l'estimer ou de le simuler.

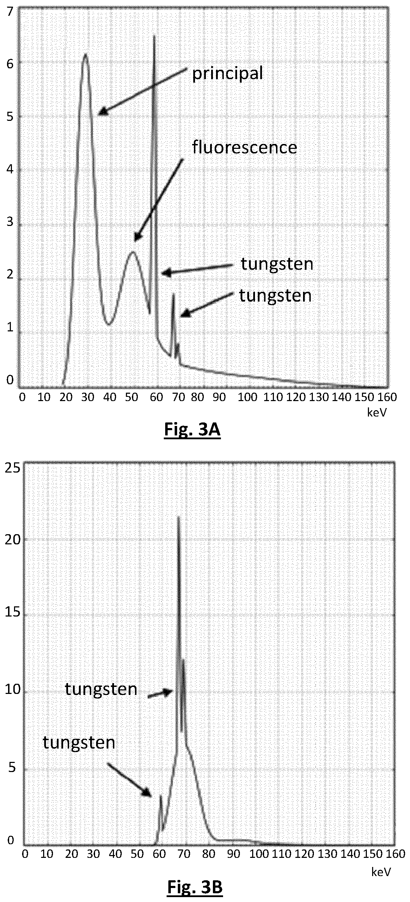

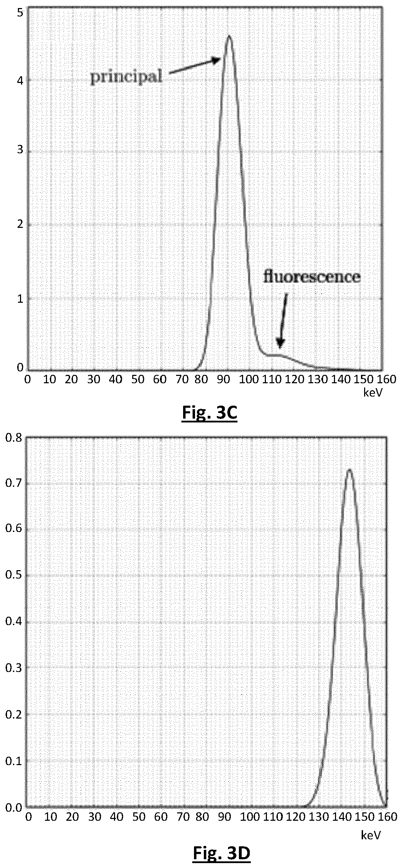

Sur les figures 3A, 3B, 3C et à 3D, on a représenté des spectres efficaces $S_{i,c}^{eff}$ de différents canaux d'un même pixel $20_i$. Il s'agit de canaux de rangs respectifs : 1, 5, 7 et 12. Les spectres efficaces ont été obtenus par simulation, en considérant une source d'irradiation comportant une anode en tungstène portée au potentiel de 160 kV, le pixel formant un spectre discrétisé selon 12 canaux de largeur spectrale 11 keV. De façon classique, le rang de chaque canal c croît avec l'énergie. Les canaux 1, 5, 7 et 12 adressent les plages d'énergie respectives [22 keV - 32 keV], [66 keV - 76 keV], [88 keV - 98 keV] et [143 keV - 153 keV], Pour les canaux de faibles rangs, les contributions d'énergies élevées sont importantes. Plus le rang du canal augmente, plus le spectre efficace d'un canal se rapproche d'une colonne de la matrice de réponse $D_i$ du pixel $20_i$, en prenant en compte un bruit gaussien. Sur chacune des figures 3A à 3D, l'axe des abscisses correspond à l'énergie, exprimée en keV, et l'axe des ordonnées correspond à la valeur de chaque canal d'énergie. Sur chacune de ces figures, on a identifié le pic principal (principal) ainsi que des pics de fluorescence (fluorescence) ou caractéristiques du tungstène (tungsten).

Lorsqu'un pixel $20_i$ est directement exposé à la source d'irradiation 11, c'est-à-dire sans objet 10 interposé entre le pixel et le détecteur, il acquiert un spectre d'irradiation directe, ou spectre plein flux, $M^0$, dont chaque la valeur $M^0(c)$ de chaque canal c, est telle que :

$$M^0(c) = \sum_1^{N_E} D_i(c, E)F_i^0(E) = \sum_1^{N_E} S_i^{eff}(c, E) \quad (2)$$

Lorsqu'un pixel $20_i$ est exposé à la source d'irradiation, avec un objet 10, présentant une fonction d'atténuation spectrale *att,* interposé entre le pixel et le détecteur, il acquiert un spectre de mesure *M,* dont chaque la valeur *M(c)* de chaque canal c, est telle que :

$$M(c) = \sum_1^{N_E} D_i(c, E)F_i^0(E)e^{-att(E)} = \sum_1^{N_E} S_i^{eff}(c, E)\, e^{-att(E)} \quad (3)$$

L'atténuation spectrale *att* est une fonction connue de l'homme du métier. Si *I* et $I_0$ représentent une intensité d'un rayonnement produit par une même source d'irradiation 10 atteignant un même pixel respectivement en présence et en l'absence d'objet, l'atténuation spectrale de l'objet *att* est telle que :

$$\frac{I(E)}{I_0(E)} = e^{-att(E)} \quad (4)$$

L'expression (3) montre que la connaissance des spectres efficaces d'un pixel $20_i$ (c'est-à-dire des spectres efficaces de chaque canal *c* d'un pixel $20_i$, permet d'obtenir une relation linéaire avec l'exponentielle de l'atténuation spectrale *att*.

L'atténuation spectrale d'un matériau dépend de l'épaisseur *L* du matériau traversée par le rayonnement, selon l'expression :

$$att(E) = -\mu(E)L \quad (5)$$

$\mu(E)$ correspond à la fonction spectrale d'atténuation linéaire. La fonction spectrale d'atténuation linéaire d'un grand nombre de matériaux est connue, et aisément accessible, par exemple dans des bases de données. Dans ce cas, la fonction spectrale d'atténuation linéaire est dite théorique.

La détermination du spectre efficace d'un pixel n'est pas directe. En effet, lorsque l'on effectue une mesure plein flux, on mesure, au niveau d'un pixel $20_i$, un spectre $M^0$ dont chaque canal c a une valeur $M^0(c)$ déterminée selon l'expression (2).

Une première possibilité pour déterminer un spectre efficace est d'effectuer une modélisation, mais cela peut être affecté d'incertitudes. Par conséquent, une estimation expérimentale est préférable.

Selon une approche expérimentale connue, on peut disposer différents objets de calibration $10_k$, dont l'atténuation est connue, entre la source d'irradiation et un pixel $20_i$ à caractériser. Par exemple, l'objet de calibration $10_k$ est formé d'une première épaisseur $L_1$ d'un premier matériau, d'atténuation spectrale linéaire théorique $\mu_1(E)$ et d'une deuxième épaisseur $L_2$ d'un deuxième matériau d'atténuation spectrale linéaire théorique $\mu_2(E)$. La fonction spectrale d'atténuation de chaque objet de calibration $10_k$ est alors :

$$att_k(E) = \mu_k(E)L_k = \mu_1(E)L_{1,k} + \mu_2(E)L_{2,k} \quad (6)$$

$L_{1,k}$ et $L_{2,k}$ sont respectivement l'épaisseur du premier matériau et l'épaisseur du deuxième matériau dans l'objet de calibration $10_k$. $L_k$ est l'épaisseur de l'objet de calibration. $\mu_k$ est une fonction spectrale d'atténuation linéaire de l'objet de calibration. Chaque épaisseur s'entend selon une droite reliant la source d'irradiation au pixel $20_i$ considéré.

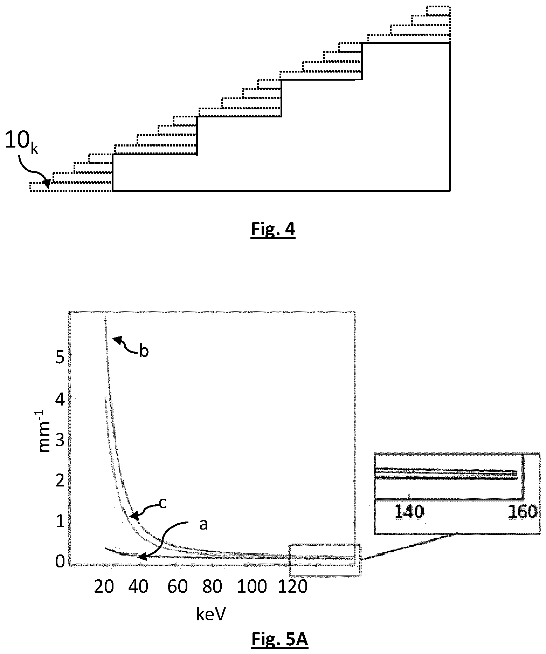

Il est usuel d'utiliser un objet composite en forme d'escalier tel que schématisé sur la figure 4, comportant plusieurs couches $10_k$, chaque couche formant un objet de calibration formé d'une première épaisseur $L_{1,k}$ d'un premier matériau et d'une deuxième épaisseur $L_{2,k}$ d'un deuxième matériau. Par exemple, le premier matériau est de l'aluminium et le deuxième matériau est un plastique tel que le PMMA (Poly(méthacrylate de méthyle)). Un tel objet composite est par exemple décrit dans Schmidt T.G et al "Spectral CT metal artifact resolution with an optimization-based reconstruction algorithm", SPIE Medical Imaging Proceedings Volume 10132, 2017.

En disposant successivement chaque couche $10_k$ face à un pixel, on acquiert une série de spectres de calibration $M_k$ dont la valeur $M_k(c)$ de chaque canal c est telle que:

$$M_k(c) = \sum_1^{N_E} S_i^{eff}(c,E)\, e^{-att_k(E)} = \sum_1^{N_E} S_i^{eff}(c,E)\, e^{-(\mu_1(E)L_{1,k} + \mu_2(E)L_{2,k})} \quad (7)$$

Si $N_k$ correspond au nombre d'objets de calibration $10_k$, correspondant par exemple au nombre de couches de l'objet composite représenté sur la figure 4, on peut former, pour chaque canal c, un vecteur $M_{k,c}$ comportant les $N_k$ valeurs $M_k(c)$. Le vecteur $M_{k,c}$ est de dimension $(N_k, 1)$

D'après (7), on peut écrire :

$$M_{k,c} = ATT \times S_{i,c}^{eff} \quad (8)$$

où :

- $S_{i,c}^{eff}$ est le spectre efficace d'un canal c du pixel $20_i$, prenant la forme d'un vecteur colonne de dimension $(N_E, 1)$;
- $ATT$ est une matrice d'atténuation, de dimension $(N_k, N_E)$. Chaque ligne de la matrice $ATT$ correspond à l'atténuation $att_k(E)$ discrétisée en énergie.

Chaque valeur $M_k(c)$, décrite en lien avec l'expression (7), est une valeur mesurée expérimentalement. En prenant en compte une estimation $\hat{S}_{i,c}^{eff}$ d'un spectre efficace, pour le canal c, le vecteur $M_{k,c}$ peut être estimé de telle sorte que :

$$\hat{M}_{k,c} = ATT \times \hat{S}_{i,c}^{eff} \quad (9)$$

où $\hat{M}_{k,c}$ est une estimation du vecteur $M_{k,c}$ prenant en compte l'estimation du spectre efficace $\hat{S}_{i,c}^{eff}$.

En réalisant un nombre $N_k$ suffisamment important de spectres mesurés $M_k$, le spectre efficace du pixel $20_i$, pour le canal c, peut être obtenu par un algorithme d'optimisation, de telle sorte que:

$$S_{i,c}^{eff} = \max_{\hat{S}_{i,c}^{eff},k} P(\hat{M}_{k,c}|M_{k,c}) \quad (10)$$

où $P(\hat{M}_{k,c}|M_{k,c})$ est une probabilité d'obtenir le vecteur $\hat{M}_{k,e}$ sachant le vecteur $M_{k,c}$. L'équation (10) peut être résolue en mettant en oeuvre un algorithme itératif de type maximum de vraisemblance, par exemple un maximum de vraisemblance Poissonienne ou un maximum de vraisemblance Gaussienne.

Cependant, les inventeurs ont constaté qu'une telle démarche est basée sur le fait que chaque matériau de calibration formant l'objet de calibration présente une fonction spectrale d'atténuation linéaire correspondant à la fonction théorique connue pour ce matériau, telle que disponible dans les bases de données usuelles.

Les inventeurs ont constaté qu'un écart entre la fonction spectrale d'atténuation linéaire réelle d'un matériau et la fonction spectrale d'atténuation linéaire théorique peut engendrer une erreur significative dans l'estimation du spectre efficace de chaque canal d'un pixel.

Pour cela, ils ont simulé une estimation d'un spectre efficace, pour deux canaux d'un même pixel, en utilisant :

- d'une part des fonctions spectrales théoriques d'atténuation linéaire disponibles pour deux matériaux constituant l'objet de calibration, ces matériaux étant le Polypropylène (PP) et le Polychlorure de Vinyle (PVC). Les fonctions spectrales théoriques d'atténuation de ces deux matériaux sont représentées sur la figure 5A (courbe a pour le PP, courbe b pour le PVC).
- d'autre part la fonction spectrale théorique d'atténuation linéaire du Polypropylène et une fonction spectrale théorique modifiée du PVC. La fonction spectrale théorique modifiée du PVC est représentée sur la courbe c de la figure 5A.

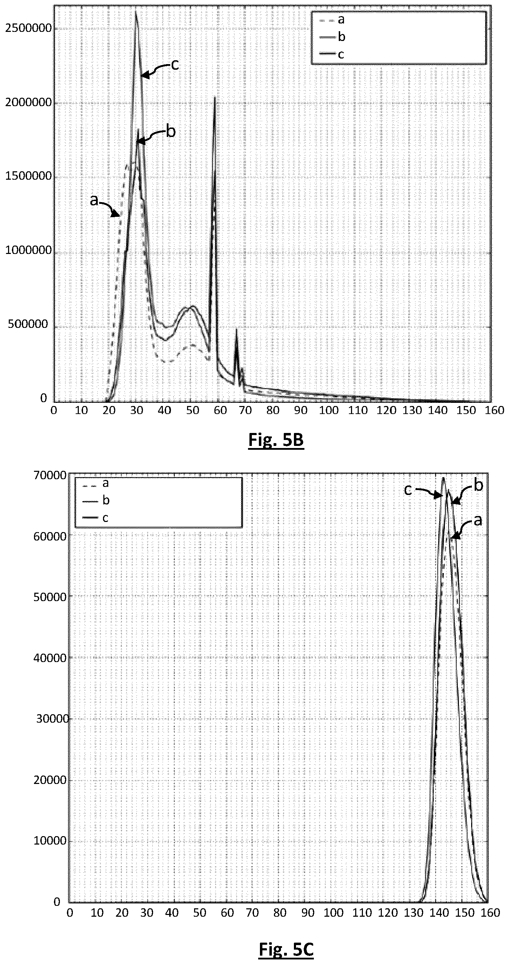

On a simulé une irradiation d'un objet composite, tel que représenté sur la figure 4, avec une source d'irradiation telle que précédemment décrite (anode de tungstène, potentiel 160 kV), chaque spectre simulé présentant 12 canaux de largeur spectrale 11 keV. La figure 5B correspond au canal 1 (bande spectrale [22 keV - 32 keV]). La figure 5C correspond au canal 12 (bande spectrale [143 keV - 153 keV]).

Sur les figures 5B et 5C, on a représenté :

- le spectre efficace vrai du canal, ce dernier étant connu puisqu'il s'agit d'une simulation : courbe a, en pointillés ;
- le spectre efficace obtenu, en mettant en oeuvre un algorithme d'optimisation itératif tel que décrit en lien avec l'expression (10), sur la base de mesures modélisées, en prenant en compte la fonction d'atténuation théorique du PP et la fonction d'atténuation modifiée du PVC : on a représenté un spectre initial, correspondant au spectre efficace estimé suite à une première itération (courbe b) ainsi que le spectre efficace obtenu suite à la convergence de l'algorithme (courbe c). L'erreur est particulièrement importante à basse énergie.

Les résultats présentés sur la figures 5B et 5C montrent que la prise en compte d'une fonction spectrale d'atténuation légèrement différente de celle correspondant au matériau utilisé dans l'objet de calibration induit une erreur significative, l'algorithme convergeant, sur chaque canal, vers une estimation significativement différente du spectre efficace réel.

Lorsque les spectres mesurés par un pixel sont destinés à une reconstruction tomographique, une erreur d'estimation du spectre efficace se propage et peut engendrer une erreur de reconstruction.

Les matériaux de calibration, formant un objet de calibration, peuvent subir des aléas dans leur processus de fabrication ou dans leur composition. Il en résulte une incertitude quant à la validité de la fonction spectrale d'atténuation linéaire théorique qui leur est affectée. Comme explicité en lien avec les figures 5A à 5C, l'incertitude sur la fonction spectrale d'atténuation linéaire prise en compte peut induire une erreur significative sur l'estimation du spectre efficace.

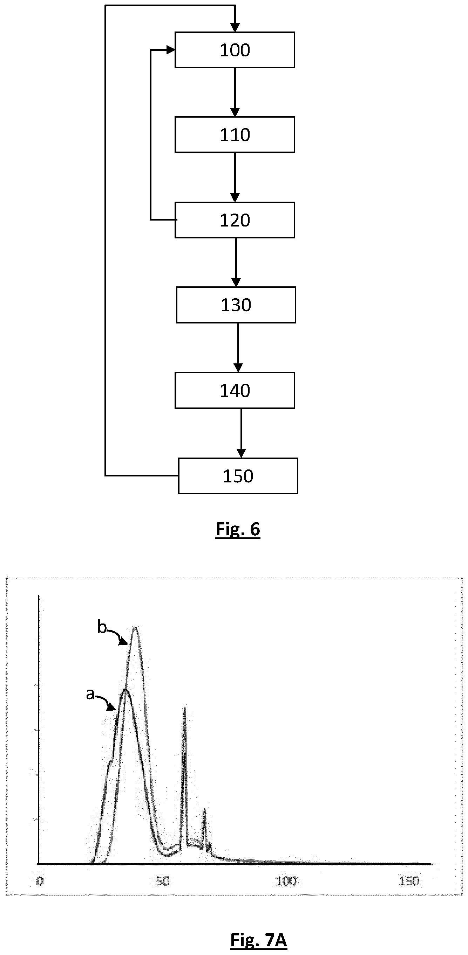

Afin de résoudre ce problème, les inventeurs ont proposé un procédé, dont les principales étapes sont schématisées sur la figure 6, et décrites ci-après.

Etape 100 : disposition d'un objet de calibration $10_k$ entre une source d'irradiation et un détecteur 20 comportant des pixels spectrométriques, tels que précédemment décrit. L'objet de calibration comporte une première épaisseur $L_{1,k}$ d'un premier matériau, d'atténuation spectrale linéaire théorique $\mu_1$ et d'une deuxième épaisseur $L_{2,k}$ d'un deuxième matériau, d'atténuation spectrale linéaire théorique $\mu_2$. Les atténuations spectrales linéaires $\mu_1$ et $\mu_2$ sont des atténuations spectrales théoriques, par exemple disponibles dans des bases de données accessibles.

Etape 110 : irradiation de l'objet de calibration et acquisition de spectres de calibration $M_k$ Etape 120 : réitération des étapes 100 à 110 en modifiant l'objet de calibration, de telle sorte que la première épaisseur $L_{1,k}$ et/ou la deuxième épaisseur $L_{2,k}$ soit modifiée.

Etape 130 : prise en compte d'une variabilité de la première fonction spectrale d'atténuation du premier matériau, et/ou de la deuxième fonction spectrale d'atténuation du deuxième matériau.

Afin de prendre en compte un écart éventuel entre la fonction spectrale d'atténuation linéaire réelle du premier matériau (et/ou du deuxième matériau), on prend en compte une fonction d'atténuation spectrale linéaire dite apparente du premier ou du deuxième matériau. La fonction d'atténuation spectrale linéaire apparente est considérée comme représentative du matériau considéré.

Lorsqu'il s'agit du premier matériau, la première fonction spectrale d'atténuation linéaire apparente est telle que :

$$\mu'_1 = a_1\mu_1 + a_2\mu_2 \quad (11)$$

où :

- $\mu_1$ et $\mu_2$ sont les fonctions d'atténuations spectrales linéaires théoriques du premier matériau et du deuxième matériau respectivement ;
- $a_1$ et $a_2$ sont des paramètres réels.

Lorsqu'il s'agit du deuxième matériau, la deuxième fonction spectrale d'atténuation linéaire apparente est telle que :

$$\mu'_2 = b_1\mu_1 + b_2\mu_2 \quad (12)$$

où :

- $\mu_1$ et $\mu_2$ sont les fonctions d'atténuations spectrales linéaires théoriques du premier matériau et du deuxième matériau respectivement ;
- $b_1$ et $b_2$ sont paramètres réels.

Ainsi, pour chaque objet de calibration, en se basant sur l'équation (6), lorsque l'on prend en compte une variabilité de la fonction d'atténuation pour le premier matériau et le deuxième matériau, l'atténuation spectrale est telle que :

$$att_k = \mu'_1 L_{1,k} + \mu'_2 L_{2,k} = (a_1\mu_1 + a_2\mu_2)L_{1,k} + (b_1\mu_1 + b_2\mu_2)L_{2,k} \quad (13)$$

Les paramètres $a_1$, $a_2$, $b_1$ et $b_2$ sont des inconnues, qui sont estimées lors de l'étape 140.

Cette étape revient à considérer que l'atténuation spectrale d'un matériau de calibration ne correspond pas exactement aux données théoriques dont on dispose pour ce matériau. La variabilité est prise en compte en :

- pondérant l'atténuation spectrale théorique pour le matériau considéré, par les réels $a_1$ (pour le premier matériau de calibration) et $b_2$ (pour le deuxième matériau de calibration) ;

- ajoutant une contribution d'une fonction spectrale de correction. Dans l'exemple décrit, la fonction spectrale de correction est une fonction spectrale d'atténuation linéaire théorique d'un autre matériau, par exemple :

  ◦ pour le premier matériau de calibration, la fonction spectrale d'atténuation linéaire théorique $\mu_2$ du deuxième matériau de calibration, cette dernière étant pondérée par le réel $a_2$ ;
  ◦ pour le deuxième matériau de calibration, la fonction spectrale d'atténuation linéaire théorique $\mu_1$ du premier matériau de calibration, cette dernière étant pondérée par le réel $b_1$.

La prise en compte de la variabilité des fonctions spectrales d'atténuation des matériaux de calibration prend en compte le fait qu'une fonction d'atténuation linéaire d'un matériau peut être exprimée par une combinaison de fonctions d'atténuation linéaire d'au moins deux autres matériaux, comme décrit dans la publication Alvarez R.E. "Energy-selective reconstructions in x-ray computerised tomography", Phys. Med. Biol 21, pp. 733, 1976.

Etape 140 : Estimation des inconnues

Au cours de cette étape, le spectre efficace $S_{i,c}^{eff}$ défini pour chaque canal c pour un même pixel $20_i$, ainsi que les paramètres $a_1$, $a_2$, $b_1$ et $b_2$, sont estimés, de telle sorte que :

$$S_{i,c}^{eff}, a_1, a_2, b_1, b_2 = \max_{\hat{S}_{i,c}^{eff}, a_1, a_2, b_1, b_2} P\big(\widehat{M}_{k,c} \big| M_{k,c}\big) \quad (14)$$

L'estimation du spectre efficace pour chaque canal, et des paramètres $a_1$, $a_2$, $b_1$, $b_2$ est réalisée en mettant en oeuvre une méthode d'optimisation itérative, tel que décrit en lien avec l'expression (10). Il peut s'agir, par exemple, d'une méthode de type MLEM. L'espace des paramètres $a_1$, $a_2$, $b_1$, $b_2$ peut être discrétisé.

L'étape 140 est mise en oeuvre pour chaque canal c du spectre d'énergie acquis par le pixel. On obtient alors autant de spectres efficaces $S_{i,c}^{eff}$ que de canaux, ces derniers pouvant être regroupés dans un matrice de spectres efficaces $S_{i}^{eff}$ du pixel, dont chaque ligne est formée par le spectre efficace $S_{i,c}^{eff}$ d'un canal.

Généralement, $a_1 > a_2$ et $b_2 > b_1$. En effet, les fonctions apparentes $\mu'_1$ et $\mu'_2$ sont supposées relativement proches des fonctions théoriques $\mu_1$ et $\mu_2$. La méthode peut comporter une contrainte quant à l'intervalle dans lequel se trouvent chaque paramètre. Par exemple, $a_1$ et $b_2$ peuvent être considérés dans un intervalle centré sur 1, par exemple $1 \pm 0.3$ ou $1 \pm 0.2$ tandis que $a_2$ et $b_1$ peuvent être considérés dans un intervalle centré sur 0, par exemple $0 \pm 0.3$ ou $0 \pm 0.2$. Une telle contrainte facilite la convergence de l'algorithme.

L'algorithme d'optimisation peut être itératif, auquel cas les valeurs $a_1$, $b_1$, $a_2$, $b_2$ peuvent être initialisées. L'initialisation peut être aléatoire. De préférence, l'initialisation est telle que $a_1 = 1$, $b_1 = 0$, $a_2 = 0$, $b_2 = 1$.

Etape 150 : réitération des étapes 100 à 140, pour un autre pixel du détecteur. Les spectres efficaces déterminés pour chaque pixel sont indépendants d'un pixel à un autre.

Selon une variante, la fonction spectrale de correction prise en compte pour le premier matériau de calibration et/ou le deuxième matériau de calibration peut être une fonction spectrale d'atténuation linéaire théorique d'un troisième matériau $\mu_3$, différent du premier matériau ou du deuxième matériau.

Les étapes telles que précédemment décrites ont été simulées, en considérant un premier matériau de calibration correspondant à PP et le deuxième matériau de calibration correspondant à du PVC. Le premier matériau de calibration a été supposé mal connu. Dans la simulation, on a pris en compte une fonction spectrale d'atténuation linéaire apparente $\mu'_1$ est telle que : $\mu'_1 = a_1\mu_1 + a_2\mu_2$ avec $a_1 = 0.92$ et $a_2 = 0.14$.

Le deuxième matériau de calibration a été supposé bien connu : Dans la simulation, la fonction spectrale d'atténuation linéaire apparente a été considérée égale à la théorie : $\mu'_2 = \mu_2$.

Lors de la simulation, on a estimé $a_1$, $a_2$, $b_1$, $b_2$ tels que :

$$\mu'_1 = a_1\mu_1 + a_2\mu_2 \text{ et } \mu'_2 = b_1\mu_1 + b_2\mu_2$$

On a estimé $a_1$ et $a_2$. L'estimation donne : $a_1 = 0.92$ ; $a_2 = 0.14$ ;

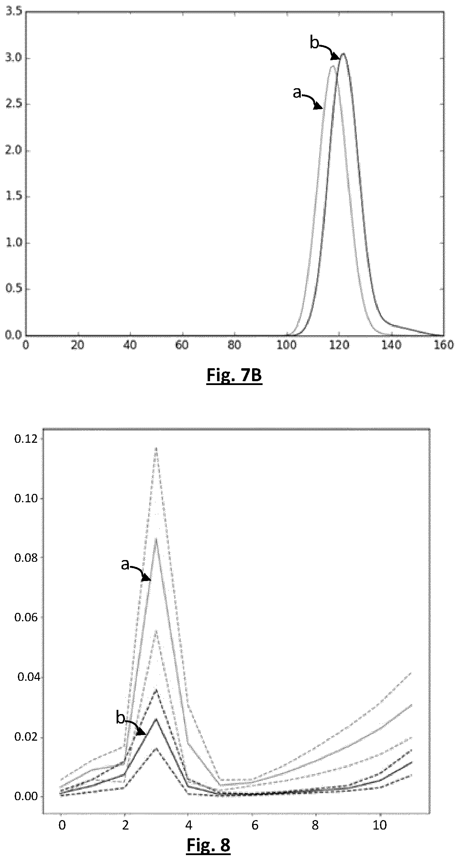

Les figures 7A et 7B montrent, respectivement pour les canaux 2 ([33 keV -43 keV]) et 10 ([121 keV - 131 keV]) :

- le spectre efficace estimé sans prise en compte de la variabilité de la fonction spectrale d'atténuation des matériaux de calibration : courbe a ;
- le spectre efficace estimé avec prise en compte de la variabilité de la fonction spectrale d'atténuation des matériaux de calibration : courbe b. On note que ce dernier se superpose au spectre efficace réel, ce dernier étant connu car simulé.

Ainsi, l'invention permet une meilleure estimation des spectres efficaces respectivement associés à des canaux d'énergie d'un pixel.

L'invention a fait l'objet d'un essai expérimental, en utilisant cinq barrettes de 128 pixels de CdTe alignés au pas de 800 $\mu$m, soit un nombre total de pixels égal à 640. Les matériaux de calibration étaient PP et PVC. Lors de la calibration, on a combiné 22 épaisseurs différentes de PP et 22 épaisseurs différentes de PVC. On a utilisé un tube générateur X avec une anode en tungstène portée à 160 kV. Les spectres acquis par les différents pixels ont fait l'objet d'un regroupement de façon à former 12 canaux de 11 keV, comme précédemment décrit.

La méthode a été appliquée en considérant que :

- $a_1$, $b_2$ ∈ [0,85 : 1.15] avec pas de discrétisation de 0.025 ;
- $a_2$, $b_1$ ∈ [-0.15 : 1.15] avec pas de discrétisation de 0.025 ;

S'agissant de mesures expérimentales, les spectres efficaces définis pour chaque pixel ne sont pas connus. Une façon de quantifier la performance de la méthode est d'estimer une erreur quadratique E(c) sur les mesures, définie pour chaque canal c, et pouvant être exprimée selon l'expression :

$$E(c) = \frac{1}{M^0(c)N_iN_k} \sum_{N_i}\sum_{N_k} \left( M_k(c) - \sum_{1}^{N_E} S_i^{eff}(c,E)\,e^{-att_k(E)} \right)^2 \quad (15)$$

où :

- $N_i$ correspond au nombre de pixels ;
- $N_k$ correspond au nombre d'objets de calibration ;
- $M^0(c)$ correspondant à une mesure plein flux, dans le canal c, définie en lien avec l'expression (2) ;
- $M_k(c)$ correspondant à la valeur, au canal c, d'un spectre de calibration $M_k$, cf. (7) ;
- $\sum_{1}^{N_E} S_i^{eff}(c,E)\,e^{-att_k(E)}$ correspondant à une estimation de $M_k(c)$ sachant la matrice des spectres efficaces $S_i^{eff}$.

On a également estimé les spectres efficaces selon l'art antérieur, sans prise en compte de la variabilité des fonctions spectrales d'atténuation linéaire des matériaux de calibration.

La figure 8 montre, pour chaque canal, les erreurs quadratiques respectivement obtenues en mettant en oeuvre respectivement la méthode de l'art antérieur (courbe a) et pour la méthode selon l'invention (courbe b). Sur la figure 8, les valeurs en pointillés représentent l'intervalle de confiance à ± 2σ. La figure 8 atteste de la pertinence de la méthode conçue par les inventeurs.

Une reconstruction tomographique a été effectuée en utilisant un fantôme comportant deux cylindres de plexiglas de diamètre 100 mm et un cylindre de Polyoxyméthylène (POM) de diamètre 20 mm. Des inserts en plastique ont été répartis dans chaque cylindre. Les cylindres s'étendent parallèlement à un même axe.

Les mesures tomographiques ont été effectuées avec le système 1 décrit en lien avec le précédent essai expérimental. La durée de chaque acquisition était de 1 seconde. On a procédé à 360 vues autour de l'axe selon lequel s'étendait les cylindres, avec une rotation angulaire de 1° entre chaque acquisition.

La méthode telle que précédemment décrite a été mise en oeuvre, en prenant en compte une variabilité uniquement sur le premier matériau de calibration, et plus précisément en imposant $a_1$ = 1 et en estimant la valeur de $b_2$.

Le fantôme a fait l'objet d'un maillage définissant des voxels. La reconstruction tomographique a permis une décomposition de l'atténuation, au niveau de chaque voxel, en une épaisseur équivalente de PP et une épaisseur équivalente de PVC.

On a également effectué une reconstruction tomographique en considérant un spectre efficace déterminé selon l'art antérieur, sans variabilité des fonctions d'atténuations spectrales des matériaux de calibration.

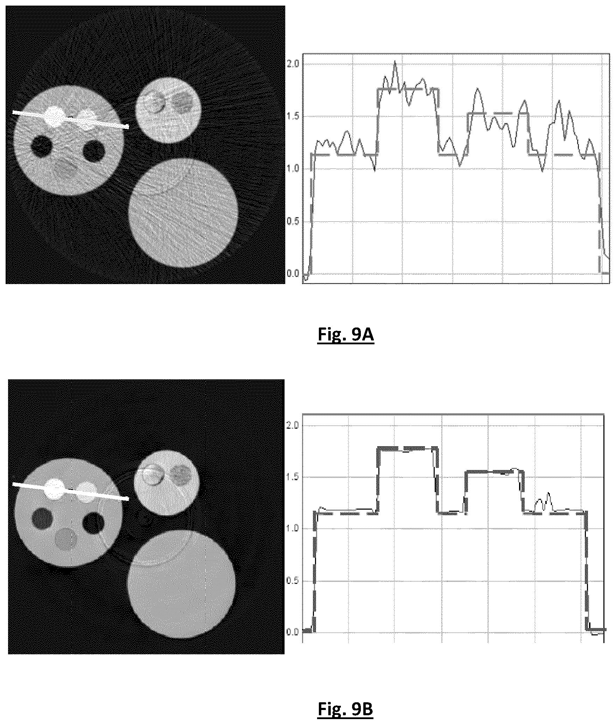

Les figures 9A et 9B montrent, respectivement pour une méthode selon l'art antérieur et selon l'invention :

- une vue en coupe de l'épaisseur équivalente de PP de chaque voxel (partie gauche de la figure) ;
- un profil tracé sur une ligne claire représentée sur la partie gauche.

Sur chaque profil, on a tracé, par une ligne pointillés, les valeurs de référence, correspondant réellement au fantôme.

La méthode selon l'art antérieur (figure 9A) est décrite dans la publication Potop A. et al "Investigation of the polynomial approach for material décomposition in spectral x-ray tomography using an energy-resolved detector", In Medical Imaging 2018: Physics of Medical Imaging, International Society for Optics and Photonics, 2018.

Les résultats obtenus par l'invention (cf. figure 9B) sont plus stables et plus proches des valeurs de référence, ce qui confirme la pertinence de l'invention.

L'invention pourra être utilisée dans les applications de type radiographie, tomographie, dans le domaine du diagnostic médical, ou du contrôle de déchets ou de matières nucléaires, dans le contrôle de bagages ou, plus largement, dans des applications liées à la sécurité, ou dans le contrôle non destructif en milieu industriel.

**Revendications**

1. Procédé de détermination d'une réponse spectrale d'un système de mesure spectrométrique de photons ionisants de type X ou gamma, le système de mesure (1) comportant :

   - une source d'irradiation (11), configurée pour émettre un rayonnement ionisant ;
   - un détecteur pixelisé (20), comportant des pixels ($20_i$), chaque pixel étant configuré pour détecter un rayonnement émis par la source de rayonnement, et à en acquérir un spectre d'énergie, selon plusieurs canaux d'énergie;

   la réponse spectrale du système de mesure comportant des spectres efficaces, définis pour chaque pixel, et dans chaque canal d'énergie, le spectre efficace ($S_{i,c}^{eff}$) d'un pixel ($20_i$), dans chaque canal d'énergie ($c$), correspondant à une distribution en énergie des photons détectés, par le pixel, dans le canal d'énergie, en l'absence d'objet interposé entre la source et le pixel ;
   le procédé comportant les étapes suivantes :

   a) disposition d'un objet de calibration ($10_k$) entre la source d'irradiation et le détecteur, l'objet de calibration comportant :

   - un premier matériau, s'étendant selon une première épaisseur ($L_{1,k}$), le premier matériau étant associé à une première fonction spectrale d'atténuation linéaire théorique ($\mu_1$);
   - un deuxième matériau s'étendant selon une deuxième épaisseur ($L_{2,k}$), le deuxième matériau étant associé à une deuxième fonction spectrale d'atténuation linéaire théorique ($\mu_2$);

   b) irradiation de l'objet de calibration ($10_k$) par la source d'irradiation et acquisition, par un pixel du détecteur, d'un spectre de calibration ($M_k$) du rayonnement transmis par l'objet de calibration et atteignant le pixel;
   c) dans différents canaux d'énergie, prise en compte d'une fonction spectrale d'atténuation de l'objet de calibration, comportant une première fonction spectrale d'atténuation linéaire apparente ($\mu'_1$) du premier matériau et une deuxième fonction spectrale d'atténuation linéaire apparente ($\mu'_2$) du deuxième matériau respectivement multipliées par la première épaisseur ($L_{1,k}$) et par la deuxième épaisseur ($L_{2,k}$);
   d) réitération des étapes a) à c), en utilisant différents objets de calibration, les différents objets de calibration présentant respectivement des premières épaisseurs et/ou des deuxièmes épaisseurs différentes ;
   e) détermination d'un spectre efficace du pixel ($S_{i,c}^{eff}$), dans au moins un canal d'énergie (c), dit canal d'énergie considéré, par une minimisation d'écarts entre respectivement :

   - une valeur du spectre de calibration ($M_{k,c}$), mesuré lors de l'étape b) de chaque itération des étapes a) à c), dans le canal d'énergie considéré (c);

- et une estimation ($\hat{M}_{k,c}$) de la valeur de chaque spectre de calibration, dans le canal d'énergie considéré, chaque estimation étant obtenue en combinant le spectre efficace du pixel ($S_{i,c}^{eff}$) et la fonction spectrale d'atténuation de l'objet de calibration prise en compte lors de l'étape c) de chaque itération des étapes a) à c);

l'étape e) mettant en oeuvre un algorithme d'optimisation ;
le procédé étant **caractérisé en ce que** lors de l'étape c) de chaque itération:

- la première fonction spectrale d'atténuation linéaire apparente ($\mu'_1$) est une somme pondérée de la première fonction spectrale d'atténuation linéaire théorique ($\mu_1$) et d'une première fonction spectrale de correction ($\mu_2$, $\mu_3$);
- et/ou la deuxième fonction spectrale d'atténuation linéaire apparente ($\mu'_2$) est une somme pondérée de la deuxième fonction spectrale d'atténuation linéaire théorique ($\mu_2$) et d'une deuxième fonction spectrale de correction ($\mu_1$, $\mu_3$).

2. Procédé selon la revendication 1, dans lequel la première fonction spectrale d'atténuation linéaire apparente ($\mu'_1$) comporte :

- la première fonction spectrale d'atténuation linéaire théorique ($\mu_1$) pondérée par un premier scalaire ($a_1$);
- la première fonction spectrale de correction ($\mu_2$) pondérée par un deuxième scalaire ($a_2$);
- le premier et le deuxième scalaire étant déterminés lors de la minimisation effectuée lors de l'étape e).

3. Procédé selon l'une quelconque des revendications précédentes, dans lequel la deuxième fonction spectrale d'atténuation linéaire apparente comporte :

- la deuxième fonction spectrale d'atténuation linéaire théorique ($\mu_2$) pondérée par un troisième scalaire ($b_1$);
- la deuxième fonction spectrale de correction ($\mu_1$) pondérée par un quatrième scalaire ($b_2$);
- le troisième et le quatrième scalaire étant déterminés lors de la minimisation effectuée lors de l'étape e).

4. Procédé selon l'une quelconque des revendications précédentes, dans lequel la première fonction spectrale de correction est la deuxième fonction spectrale d'atténuation linéaire théorique ($\mu_2$).

5. Procédé selon l'une quelconque des revendications précédentes, dans lequel la deuxième fonction spectrale de correction est la première fonction spectrale d'atténuation linéaire théorique ($\mu_1$).

6. Procédé selon l'une quelconque des revendications précédentes, dans lequel la première fonction spectrale de correction ou la deuxième fonction spectrale de correction est une fonction spectrale d'atténuation linéaire théorique d'un troisième matériau ($\mu_3$), différent du premier matériau et du deuxième matériau.

7. Procédé selon l'une quelconque des revendications précédentes, dans lequel l'étape e) met en oeuvre un algorithme d'optimisation itératif.

8. Procédé selon l'une quelconque des revendications précédentes, dans lequel l'étape e) comporte :

- une formation d'un vecteur ($M_{k,c}$), comportant les différentes valeurs des spectres de calibration ($M_k(c)$), respectivement mesurés au cours de l'étape c) de chaque itération, pour le canal d'énergie considéré (c) ;
- une estimation dudit vecteur ($\hat{M}_{k,c}$), chaque terme du vecteur étant estimé en combinant le spectre efficace du pixel et la fonction spectrale d'atténuation de l'objet de calibration respectivement prise en compte lors de l'étape c) de chaque itération.

9. Procédé selon l'une quelconque des revendications précédentes, dans lequel les étapes a) à e) sont effectuées pour chaque pixel du détecteur.

10. Système de mesure spectrométrique (1) de photons ionisants de type X ou gamma, le système de mesure comportant :

- une source d'irradiation (11), configurée pour émettre un rayonnement ionisant ;

- un détecteur pixelisé (20), comportant des pixels (20$_i$), chaque pixel étant configuré pour détecter un rayonnement émis par la source de rayonnement, et à en acquérir un spectre d'énergie, selon plusieurs canaux d'énergie;
- le système de mesure comportant une unité de traitement, configurée pour mettre en oeuvre l'étape e) d'un procédé selon l'une quelconque des revendications précédentes, à partir de différents spectres de calibration mesurés par au moins un pixel, les spectres de calibration étant obtenus en mettant en oeuvre les étapes a) et d) dudit procédé.

**Patentansprüche**

1. Verfahren zur Bestimmung einer spektralen Antwort eines spektrometrischen Messsystems für ionisierende Photonen vom Röntgen- oder Gammatyp, wobei das Messsystem (1) umfasst:

- eine Strahlungsquelle (11), die dazu ausgestaltet ist, eine ionisierende Strahlung auszusenden;
- einen gepixelten Detektor (20), der Pixel (20i) umfasst, wobei jedes Pixel dazu ausgestaltet ist, eine von der Strahlungsquelle ausgesendete Strahlung zu detektieren und ein Energiespektrum von ihr zu erfassen, gemäß mehreren Energiekanälen;

wobei die spektrale Antwort des Messsystems effektive Spektren umfasst, die für jedes Pixel definiert sind, und in jedem Energiekanal, wobei das effektive Spektrum ( $S_{i,c}^{eff}$ ) eines Pixels (20i) in jedem Energiekanal (*c*) einer Energieverteilung der von dem Pixel in dem Energiekanal detektierten Photonen bei Nichtvorliegen eines zwischen die Quelle und das Pixel gesetzten Objekts entspricht;
wobei das Verfahren die folgenden Schritte umfasst:

a) Anordnen eines Kalibrierungsobjekts (10$_k$) zwischen der Strahlungsquelle und dem Detektor, wobei das Kalibrierungsobjekt umfasst:

- einen ersten Stoff, der sich entlang einer ersten Dicke (L$_{1,k}$) erstreckt, wobei der erste Stoff einer ersten theoretischen linearen spektralen Dämpfungsfunktion ($\mu_1$) zugeordnet ist;
- einen zweiten Stoff, der sich entlang einer zweiten Dicke (L$_{2,k}$) erstreckt, wobei der zweite Stoff einer zweiten theoretischen linearen spektralen Dämpfungsfunktion ($\mu_2$) zugeordnet ist;

b) Bestrahlen des Kalibrierungsobjekts (10$_k$) durch die Strahlungsquelle und Erfassen, durch ein Pixel des Detektors, eines Kalibrierungsspektrums (M$_k$) der von dem Kalibrierungsobjekt durchgelassenen und das Pixel erreichenden Strahlung;
c) in verschiedenen Energiekanälen, Berücksichtigen einer spektralen Dämpfungsfunktion des Kalibrierungsobjekts, die eine erste scheinbare lineare spektrale Dämpfungsfunktion ($\mu'_1$) des ersten Stoffs und eine zweite scheinbare lineare spektrale Dämpfungsfunktion ($\mu'_2$) des zweiten Stoffs umfasst, die jeweils mit der ersten Dicke (L$_{1,k}$) und mit der zweiten Dicke (L$_{2,k}$) multipliziert sind;
d) Reiteration der Schritte a) bis c) unter Verwendung verschiedener Kalibrierungsobjekte, wobei die verschiedenen Kalibrierungsobjekte jeweils verschiedene erste Dicken und/oder zweite Dicken aufweisen;

e) Bestimmen eines effektiven Spektrums des Pixels ( $S_{i,c}^{eff}$ ) in mindestens einem Energiekanal (c), betrachteter Energiekanal genannt, durch eine Minimierung von Abweichungen zwischen jeweils:
- einem Wert des Kalibrierungsspektrums (M$_{k,c}$), das beim Schritt b) jeder Iteration der Schritte a) bis c) gemessen wird, in dem betrachteten Energiekanal (c);
- und einer Schätzung ($\hat{M}_{k,c}$) des Werts jedes Kalibrierungsspektrums in dem betrachteten Energiekanal, wobei jede Schätzung erhalten wird, indem das effektive Spektrum des Pixels ( $S_{i,c}^{eff}$ ) und die spektrale Dämpfungsfunktion des Kalibrierungsobjekts, die beim Schritt c) jeder Iteration der Schritte a) bis c) berücksichtigt wird, kombiniert werden,

wobei der Schritt e) einen Optimierungsalgorithmus ausführt;
wobei das Verfahren **dadurch gekennzeichnet ist, dass** beim Schritt c) jeder Iteration:

- die erste scheinbare lineare spektrale Dämpfungsfunktion ($\mu'_1$) eine gewichtete Summe aus der ersten theoretischen linearen spektralen Dämpfungsfunktion ($\mu_1$) und einer ersten spektralen Korrekturfunktion ($\mu_2$, $\mu_3$) ist;
- und/oder die zweite scheinbare lineare spektrale Dämpfungsfunktion ($\mu'_2$) eine gewichtete Summe aus der zweiten theoretischen linearen spektralen Dämpfungsfunktion ($\mu_2$) und einer zweiten spektralen Korrekturfunktion ($\mu_1$, $\mu_3$) ist.

2. Verfahren nach Anspruch 1, bei dem die erste scheinbare lineare spektrale Dämpfungsfunktion ($p'_1$) umfasst:

 - die erste theoretische lineare spektrale Dämpfungsfunktion ($\mu_1$), die durch einen ersten Skalar ($a_1$) gewichtet ist;
 - die erste spektrale Korrekturfunktion ($\mu_2$), die durch einen zweiten Skalar ($a_2$) gewichtet ist;
 - wobei der erste und der zweite Skalar bei der beim Schritt e) durchgeführten Minimierung bestimmt werden.

3. Verfahren nach einem der vorhergehenden Ansprüche, bei dem die zweite scheinbare lineare spektrale Dämpfungsfunktion umfasst:

 - die zweite theoretische lineare spektrale Dämpfungsfunktion ($\mu_2$), die durch einen dritten Skalar ($b_1$) gewichtet ist;
 - die zweite spektrale Korrekturfunktion ($\mu_1$), die durch einen vierten Skalar ($b_2$) gewichtet ist;
 - wobei der dritte und der vierte Skalar bei der beim Schritt e) durchgeführten Minimierung bestimmt werden.

4. Verfahren nach einem der vorhergehenden Ansprüche, bei dem die erste spektrale Korrekturfunktion die zweite theoretische lineare spektrale Dämpfungsfunktion ($\mu_2$) ist.

5. Verfahren nach einem der vorhergehenden Ansprüche, bei dem die zweite spektrale Korrekturfunktion die erste theoretische lineare spektrale Dämpfungsfunktion ($\mu_1$) ist.

6. Verfahren nach einem der vorhergehenden Ansprüche, bei dem die erste spektrale Korrekturfunktion oder die zweite spektrale Korrekturfunktion eine theoretische lineare spektrale Dämpfungsfunktion eines dritten Stoffs ($\mu_3$) ist, der von dem ersten Stoff und von dem zweiten Stoff verschieden ist.

7. Verfahren nach einem der vorhergehenden Ansprüche, bei dem der Schritt e) einen iterativen Optimierungsalgorithmus ausführt.

8. Verfahren nach einem der vorhergehenden Ansprüche, bei dem der Schritt e) umfasst:

 - ein Bilden eines Vektors ($M_{k,c}$), der die verschiedenen Werte der Kalibrierungsspektren ($M_k(c)$) umfasst, die jeweils während des Schritts c) jeder Iteration gemessen werden, für den betrachteten Energiekanal (c);
 - ein Schätzen des Vektors ($\hat{M}_{k,c}$), wobei jeder Term des Vektors geschätzt wird, indem das effektive Spektrum des Pixels und die spektrale Dämpfungsfunktion des Kalibrierungsobjekts, die jeweils beim Schritt c) jeder Iteration berücksichtigt wird, kombiniert werden.

9. Verfahren nach einem der vorhergehenden Ansprüche, bei dem die Schritte a) bis e) für jedes Pixel des Detektors durchgeführt werden.

10. Spektrometrisches Messsystem (1) für ionisierende Photonen vom Röntgen- oder Gammatyp, wobei das Messsystem umfasst:

 - eine Strahlungsquelle (11), die dazu ausgestaltet ist, eine ionisierende Strahlung auszusenden;
 - einen gepixelten Detektor (20), der Pixel (20i) umfasst, wobei jedes Pixel dazu ausgestaltet ist, eine von der Strahlungsquelle ausgesendete Strahlung zu detektieren und ein Energiespektrum von ihr zu erfassen, gemäß mehreren Energiekanälen;
 - wobei das Messsystem eine Verarbeitungseinheit umfasst, die dazu ausgestaltet ist, den Schritt e) eines Verfahrens nach einem der vorhergehenden Ansprüche anhand von verschiedenen Kalibrierungsspektren, die von mindestens einem Pixel gemessen werden, auszuführen, wobei die Kalibrierungsspektren erhalten werden, indem die Schritte a) und d) des Verfahrens ausgeführt werden.

**Claims**

1. Method for determining a spectral response of a spectrometric system for measuring ionizing x-ray or gamma-ray photons, the measuring system (1) comprising:

   - a radiation source (11), configured to emit ionizing radiation;
   - a pixelated detector (20), which comprises pixels (20i), each pixel being configured to detect radiation emitted by the radiation source, and to acquire thereof an energy spectrum, in a plurality of energy channels;

   the spectral response of the measuring system comprising effective spectra, defined for each pixel, and in each energy band, the effective spectrum ($S_{i,c}^{eff}$) of a pixel (20i), in each energy channel (c), corresponding to an energy distribution of the photons detected, by the pixel, in the energy channel, in the absence of any object interposed between the source and the pixel;
   the method comprising the following steps:

   a) placing a calibration object ($10_k$) between the radiation source and the detector, the calibration object comprising:

   - a first material, having a first thickness ($L_{1,k}$), the first material being associated with a first theoretical linear-attenuation spectral function ($\mu_1$);
   - a second material, having a second thickness ($L_{2,k}$), the second material being associated with a second theoretical linear-attenuation spectral function ($\mu_2$);

   b) irradiating the calibration object ($10_k$) with the radiation source and acquiring, with a pixel of the detector, a calibration spectrum ($M_k$) of the radiation transmitted by the calibration object and reaching the pixel;
   c) in various energy channels, taking into account an attenuation spectral function of the calibration object, this function comprising a first apparent linear-attenuation spectral function ($\mu'_1$) of the first material and a second apparent linear-attenuation spectral function ($\mu'_2$) of the second material multiplied by the first thickness ($L_{1,k}$) and by the second thickness ($L_{2,k}$), respectively;
   d) repeating steps a) to c), using various calibration objects, the various calibration objects having different first thicknesses and/or second thicknesses, respectively;

   e) determining an effective spectrum of the pixel ($S_{i,c}^{eff}$), in at least one energy channel *(c)*, called the energy channel in question, via a minimization of differences between respectively:

   - a value of the calibration spectrum ($M_{k,c}$), measured in step b) of each iteration of steps a) to c), in the energy channel in question (c);
   - and an estimation ($\hat{M}_{k,c}$) of the value of each calibration spectrum, in the energy channel in question, each estimation being obtained by combining the effective spectrum of the pixel ($S_{i,c}^{eff}$) and the attenuation spectral function of the calibration object taken into account in step c) of each iteration of steps a) to c);

   step e) employing an optimization algorithm;
   the method being **characterized in that**, in step c) of each iteration:

   - the first apparent linear-attenuation spectral function ($\mu'_1$) is a weighted sum of the first theoretical linear-attenuation spectral function ($\mu_1$) and of a first correction spectral function ($\mu_2$, $\mu_3$);
   - and/or the second apparent linear-attenuation spectral function ($\mu'_2$) is a weighted sum of the second theoretical linear-attenuation spectral function ($\mu_2$) and of a second correction spectral function ($\mu_1$, $\mu_3$).

2. Method according to Claim 1, wherein the first apparent linear-attenuation spectral function ($p'_1$) comprises:

   - the first theoretical linear-attenuation spectral function ($\mu_1$) weighted by a first scalar ($a_1$);
   - the first correction spectral function ($\mu_2$) weighted by a second scalar ($a_2$);
   - the first and the second scalar being determined during the minimization performed in step e).

3. Method according to either one of the preceding claims, wherein the second apparent linear-attenuation spectral function comprises:

- the second theoretical linear-attenuation spectral function ($\mu_2$) weighted by a third scalar ($b_1$);
- the second correction spectral function ($\mu_1$) weighted by a fourth scalar ($b_2$);
- the third and the fourth scalar being determined during the minimization performed in step e).

4. Method according to any one of the preceding claims, wherein the first correction spectral function is the second theoretical linear-attenuation spectral function ($\mu_2$).

5. Method according to any one of the preceding claims, wherein the second correction spectral function is the first theoretical linear-attenuation spectral function ($\mu_1$).

6. Method according to any one of the preceding claims, wherein the first correction spectral function or the second correction spectral function is a theoretical linear-attenuation spectral function of a third material ($\mu_3$), different from the first material and from the second material.

7. Method according to any one of the preceding claims, wherein step e) employs an iterative optimization algorithm.

8. Method according to any one of the preceding claims, wherein step e) comprises:

- forming a vector *($M_{k,c}$)*, containing the various values of the calibration spectra ($M_k$(c)) that were measured in step c) of each iteration, for the energy channel in question (c), respectively;
- estimating said vector ($\hat{M}_{k,c}$), each term of the vector being estimated by combining the effective spectrum of the pixel and the attenuation spectral function of the calibration object taken into account in step c) of each iteration, respectively.

9. Method according to any one of the preceding claims, wherein steps a) to e) are performed for each pixel of the detector.

10. Spectrometric system (1) for measuring ionizing X-ray or gamma-ray photons, the measuring system comprising:

- a radiation source (11), configured to emit ionizing radiation;
- a pixelated detector (20), which comprises pixels (20i), each pixel being configured to detect radiation emitted by the radiation source, and to acquire thereof an energy spectrum, in a plurality of energy channels;
- the measuring system comprising a processing unit, configured to implement step e) of a method according to any one of the preceding claims, on the basis of various calibration spectra measured by at least one pixel, the calibration spectra being obtained by employing steps a) and d) of said method.

**Fig. 1**

**Fig. 2A**

**Fig. 2B**

**Fig. 2C**

**Fig. 2D**

**Fig. 3A**

**Fig. 3B**

**Fig. 3C**

**Fig. 3D**

EP 3 851 837 B1

**Fig. 4**

**Fig. 5A**

**Fig. 5B**

**Fig. 5C**

**Fig. 6**

**Fig. 7A**

**Fig. 7B**

**Fig. 8**

**Fig. 9A**

**Fig. 9B**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LIU XUEJIN et al.** Spectral response model for a multibin photon-counting spectral computed tomography détecter and its applications. *JOURNAL OF MEDICAL IMAGING, SOCIETY OF PHOTO-OPTICAL INSTRUMENTATION ENGINEERS, 1000 20TH ST. BELLINGHAM WA 98225-6705 USA,* 11 Septembre 2015, vol. 2 (3), ISSN 2329-4302, 33502
- **SCHMIDT T.G et al.** Spectral CT metal artifact resolution with an optimization-based reconstruction algorithm. *SPIE Medical Imaging Proceedings,* 2017, vol. 10132
- **ALVAREZ R.E.** Energy-selective reconstructions in x-ray computerised tomography. *Phys. Med. Biol,* 1976, vol. 21, 733
- **POTOP A. et al.** Investigation of the polynomial approach for material décomposition in spectral x-ray tomography using an energy-resolved detector. *In Medical Imaging 2018: Physics of Medical Imaging, International Society for Optics and Photonics,* 2018